# EUROPÄISCHE PATENTSCHRIFT

(11) **EP 0 368 303 B1**
(45) Veröffentlichungstag und Bekanntmachung des Hinweises auf die Patenterteilung: **08.05.1996**
(21) Anmeldenummer: 89120753.2
(22) Anmeldetag: 09.11.1989
(51) Int. Cl.: G08B 13/16

(54) **Vorrichtung zur Ultraschallüberwachung von Räumen, insbesondere von Kraftfahrzeug-Innenräumen**
Device for the ultrasound surveillance of spaces, particularly of motor vehicle interior spaces
Dispositif de surveillance ultrasonore des volumes, en particulier des volumes internes des véhicules à moteur

(30) Priorität: 10.11.1988 DE 3838150
(43) Veröffentlichungstag der Anmeldung: 16.05.1990
(73) Patentinhaber: Delphi Automotive Systems Deutschland GmbH, D-42369 Wuppertal (DE)
(72) Erfinder: Bergmann, Jürgen, Dipl.-Ing., D-4352 Herten (DE)
(74) Vertreter: Priebisch, Rüdiger

(56) Entgegenhaltungen:
- EP-A- 0 026 385
- GB-A- 2 050 022
- US-A- 4 499 564

## Beschreibung

Die Erfindung richtet sich auf eine Vorrichtung der in der Präambel des Anspruches 1 angegebenen Art.

Bei diesem aus der EP-A-0 026 385 bekannten Verfahren arbeitet das Ultraschall-Alarmsystem mit einer Ultraschall-Sender-Empfängeranordnung, die nach dem Echolotprinzip arbeitet. Der Sende-impuls ist beim Eintreffen der Raumantwort bereits abgeschaltet. Damit wir die reine Reflektion des Raumes gemessen. Ein Interferieren mit der emitierten Schallwelle ist nicht möglich. Die zur Durchführung des Verfahrens vorgesehene Vorrichtung ist auch nicht in der Lage, ein zeitlich synchrones Senden und gleichzeitiges Empfangen von Ultraschall-Signalen zu gewährleisten, da das Sendesignal nicht vom Auswerter selber, sondern von einem separaten Oszilator erzeugt wird. Eine ähnliche Vorrichtung zeigt die GB-A-2 050 022. Aus der DE-OS 2 318 927 ist eine Vorrichtung zur Ultraschallüberwachung bekannt, die nach dem sogennanten "Doppler-Effekt" arbeitet.

Der Erfindung liegt die Aufgabe zugrunde, ein einfache, preiswerte und sehr zuverlässige Überwachungsvorrichtung der genannten Art zu entwickeln, die auch in Ruhezeiten erfolgende Änderungen im Überwachungsraum nachträglich eindeutig feststellen kann. Dies wird erfindungsgemäß durch die im Kennzeichen des Anspruches angeführten Maßnahmen erreicht, denen folgende besondere Bedeutung zukommt:

Die Erfindung befaßt sich mit dem im Überwachungsraum entstehenden Interferenzfeld, das sich aus der Überlagerung der verschiedenen Ultraschallwellen ergibt, die dort durch den Ultraschallgeber entstehen und als Reflexions-Signale an den diversen Objekten und den Begrenzungswänden im Überwachungsraum reflektiert werden. Das Augenmerk der Erfindung liegt dabei nicht auf dem stationären Zustand des Interferenzfeldes, sondern vor allem auf der Anfangsphase beim Aufbau des Interferenzfeldes. Die Erfindung verfolgt den zeitlichen Aufbau dieses Interferenzfeldes am Ort des Ultraschallempfängers und hält diesen in einem Zeit-Meßwert-Profil fest. Die Erfindung hat erkannt, daß dieses Profil eine eindeutige und zuverlässige Information über die bestehende individuelle Beschaffenheit des Überwachungsraumes ist. Dieses Profil ändert sich bereits signifikant, wenn ein einzelnes Objekt im Überwachungsraum erscheint oder entfernt wird oder auch nur seinen Platz im Raum verändert. Dies stellt der Auswerter in der erfindungsgemäßen Vorrichtung deshalb fest, weil er das dann sich ergebende abweichende neue Zeit-Meßwert-Profil mit dem abgespeicherten vorausgehenden Referenzprofil vergleicht. Aus Sicherheitsgründen, die Fehlalarm vermeiden sollen, wird eine Toleranzspanne bei dem sich aus diesem Vergleich ergebenden Differenzprofil gewährt, um etwaige Änderungen im zeitlichen Aufbau des Interferenzfeldes durch unmaßgebliche Effekte, wie Temperaturänderungen im Fahrzeuginnenraum, auszuschließen.

Da es auf die Anfangsphase beim Interferenzfeld-Aufbau im Überwachungsraum ankommt, gibt der Ultraschallgeber vorzugsweise nur eine definierte Sendezeit lang Ultraschall-Impulse ab, wobei aber die Meßzeit des Ultraschallempfängers mit dem Ansteuerungssignal des Gebers zeitlich exakt abgestimmt sein muß, um stets reproduzierbare Meßabläufe zu gewährleisten. Die Meßzeit braucht also hinsichtlich ihres Anfangs und Endes nur eine stets gleiche Position bezüglich der Sendezeit der Ultraschallimpulse zu haben. Im einfachsten Fall wird man die Meßzeit gleich der Sendezeit wählen, weil beide durch dasselbe Steuerungsmittel im Auswerter dann exakt gleich ausgelöst werden können, wofür sich, gemäß Anspruch 9, ein Mikro-Computer besonders eignet.

Eine besonders einfache und doch sehr zuverlässige Auswertemöglichkeit besteht, wenn man das Zeit-Meßwert-Profil gemäß Anspruch 2 quantisiert und die dann erlangte Zahlenreihe von Meßwerten als Referenzdaten in eine Datenbank gibt. Die Maßnahmen des Anspruches 3 ergeben eine einwandfreie Ermittlung dieser Referenzdaten aus einer Vielzahl von Meßgängen, wo sich auch etwaige mechanische Schwingungen der Objekte oder Raumgrenzen erfassen lassen. Die im Anspruch 4 vorgesehenen mehrfachen Datenspeicher begründen eine Lernfähigkeit der Vorrichtung, die sich jeweils auf geänderte Betriebsbedingungen im Überwachungsraum selbsttätig einstellt. Dadurch können Temperaturschwankungen oder Luftdruckschwankungen im Überwachungsraum nicht zu Fehlalarm führen. Dabei sind die Empfindlichkeit und Störsicherheit der erfindungsgemäßen Vorrichtung groß. Die Vorrichtung paßt sich nicht nur veränderten Umweltbedingungen an, sondern reagiert auch auf langsamste Bewegungen. Die Maßnahmen nach Anspruch 5 sichern, daß nur eindeutige Meßergebnisse Alarm auslösen. Die Empfindlichkeit läßt sich durch die Aussetzer im Ansteuerungssignal des Ultraschallgebers nach Anspruch 6 erhöhen, weil dadurch das Zeit-Meßwert-Profil beim zeitlichen Aufbau des Interferenzfeldes besonders markant ausfällt.

Die Maßnahme des Anspruches 7 gibt eine Selbstjustage der erfindungsgemäßen Vorrichtung, die einen kostspieligen hardware-mäßigen Aufwand vermeidet. Die Leistungsaufnahme läßt sich, ohne Beeinträchtigung der Überwachungssicherheit, durch die Maßnahmen nach Anspruch 8 gering halten.

Weitere Maßnahmen und Vorteile der Erfindung ergeben sich aus den Zeichnungen und der nachfolgenden Beschreibung.

In den Zeichnungen ist die Erfindung in einem Ausführungsbeispiel dargestellt. Es zeigen:
- Fig. 1: schematisch, in Form eines Blockschaltbildes, den Aufbau und auch die prinzipielle Wirkungsweise der erfindungsgemäßen Vorrichtung und
- Fig. 2: bis 4 in unterschiedlichen Maßstäben die an verschiedenen, nachfolgend noch näher angegebenen Stellen der Schaltung von Fig. 1 anfallenden Signale und Meßprofile.

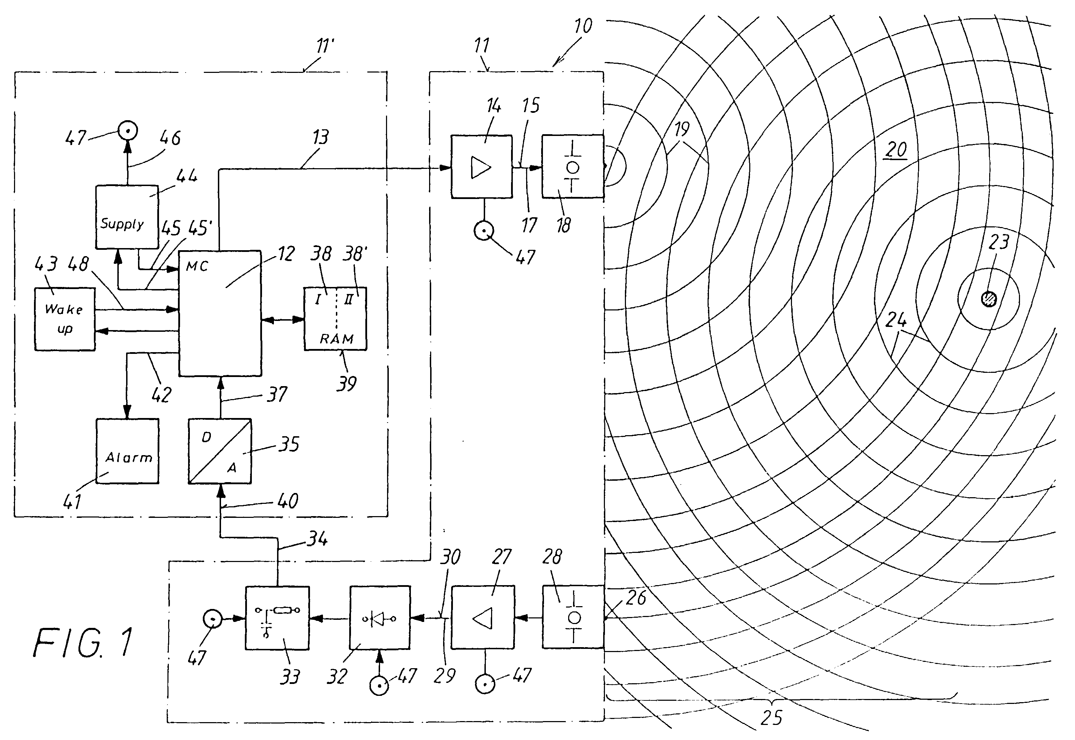

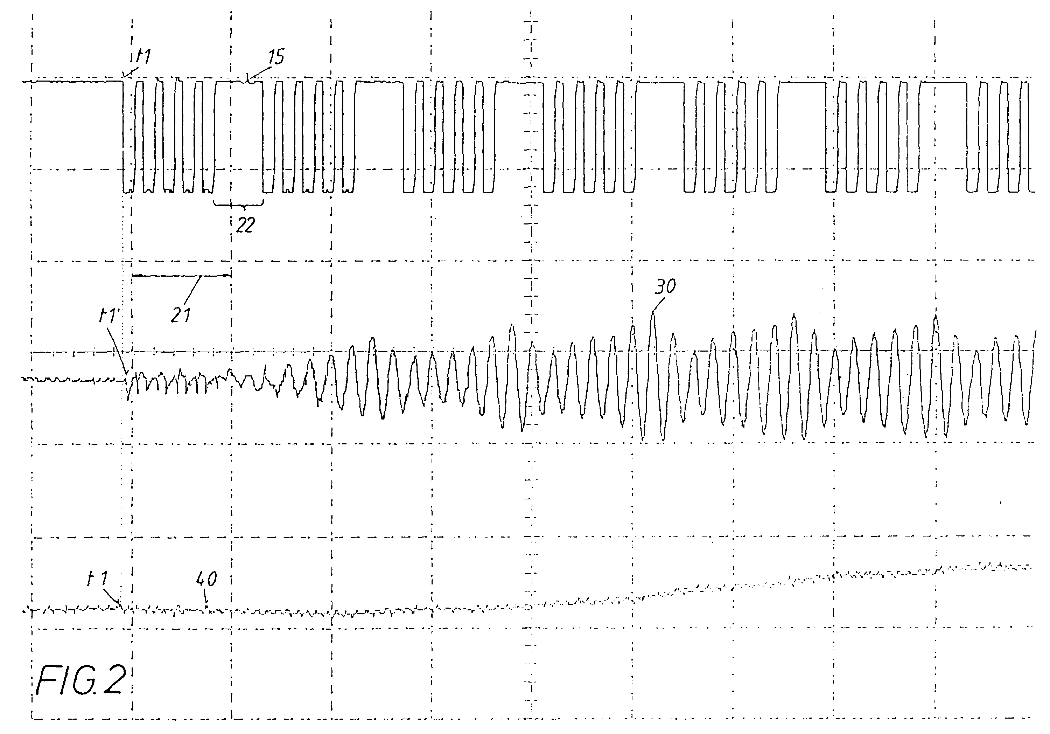

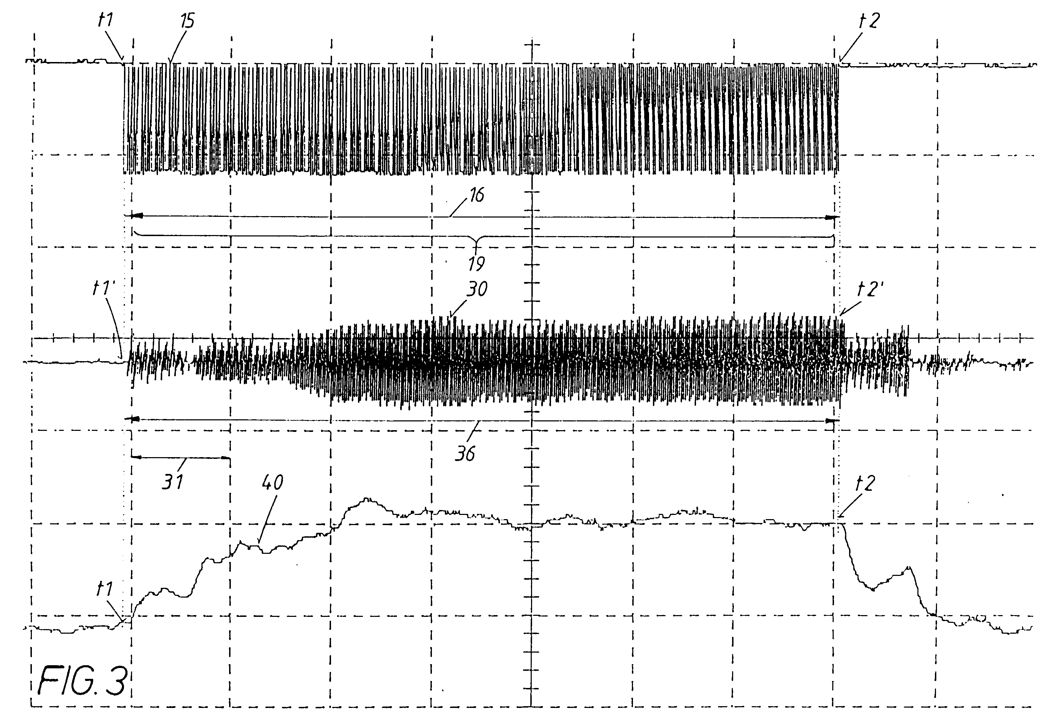

Die Vorrichtung 10 umfaßt die aus Fig. 1 ersichtlichen elektronischen Bauteile, die vorteilhaft in zwei, dort durch Strichpunktlinien jeweils umgrenzten gesonderten Gehäusen 11, 11' gruppenweise untergebracht sind. Ausgehend von einem Prozessor 12 (Mikro-Computer) im Gehäuse 11' wird über eine elektrische Leitung 13 und einen Sendeverstärker 14 ein aus der obersten Kurve in Fig. 2 ersichtliches Ansteuerungssignal 15 erzeugt, und zwar für eine definierte, aus der obersten Fig. in Fig. 3 ersichtliche Sendezeit 16 von hier ca. 0,07 Sekunden. Dieses am Ausgang 17 des Sendeverstärkers 14 anfallende Signal 15 beaufschlagt einen Ultraschallgeber 18, der den entsprechenden Ultraschall-Impuls 19 erzeugt und damit die durch Kreise im Überwachungsraum 20 der Fig. 1 angedeutete Schallstrahlungerzeugt, die nachfolgend kurz als "Sendeimpuls 19" bezeichnet werden soll. Der Sendeimpuls 19 hat also einen vom Prozessor 12 genau vorbestimmten Sendeimpuls-Beginn t1 und ein die Sendezeit 16 genau definiertes Impulsende t2. Damit ist der Sendeimpuls 19 reproduzierbar, wobei die damit erzeugte äquivalente Schallwelle folgendes, aus der obersten Figur in Fig. 2 ersichtliches Aussehen hat:

Die in Fig. 2 vertikal verlaufenden Strichlinien bestimmen mit ihrem dort angedeuteten Abstand 21 eine Teilung von 0,2 msec. der dortigen, horizontal verlaufenden Zeitskala. Das Ansteuerungssignal 15 umfaßt ein Rechteckprofil mit einer Frequenz von 25 kHz. Um ein noch näher zu beschreibendes markantes Meßergebnis in der mittleren und unteren Kurve von Fig. 2 bzw. 3 zu erhalten, ist das Ansteuerungssignal 15 mit Aussetzern 22 gemäß der obersten Kurve in Fig. 2 versehen, die nach fünf Schwingungen sich über einen Zeitraum von zwei Signal längen hier erstreckt und somit am Ultraschallgeber 18 eine entsprechende Schwebung im Sendeimpuls 19 erzeugt. Damit wird der Überwachungsraum 20 und die dort befindlichen Objekte 23 bestrahlt. An den in Fig. 1 nicht näher angezeigten Wänden des Überwachungsraumes einerseits und an den Objekten 23 im Überwachungsraum 20 andererseits wird nun der Sendeimpuls 19 reflektiert, was in Fig. 1, ausgehend von dem als Punkt angenommenen Objekt 23 die in Fig. 1 durch Kreislinien verdeutlichten reflektierten Signale 24 erzeugt, die nachfolgend kurz "Reflexionssignale 24" bezeichnet werden sollen.

Die Sendeimpulse 19 und die ausgelösten Reflexionssignale 24 erzeugen im Überwachungsraum 20 ein Interferenzfeld 25, das in Fig. 1 durch die Überschneidung und die Schnittpunkte der die kugelförmigen Schallwellen veranschaulichenden Kreise in Fig. 1 verdeutlicht ist. Dabei kommt es erfindungsgemäß auf die Anfangsphase bei der Entstehung dieses Interferenzfeldes 25 an, also den zeitlichen Ablauf seiner Entstehung, der nachfolgend als "zeitlicher Aufbau des Interferenzfeldes" benannt werden soll. Dieser Aufbau des Interferenzfeldes 25 wird nun von einem Ultraschallempfänger 28 an einem definierten Ort 26 überwacht. An diesem Ort 26 wird somit durch den Aufbau des Feldes 25 eine spezifische Aussage über die jeweilige Beschaffenheit des Überwachungsraumes 20 und der dort befindlichen Gegenstände 23 erlangt. Weil also der Sendeimpuls 19 stets exakt reproduzierbar ist, wie bereits erwähnt wurde, sind auch die zum Aufbau des Interferenzfeldes 25 sich einstellenden Reflexionssignale 24 gleich, solange im Überwachungsraum 20 keine Änderung eintritt, womit auch das Interferenzfeld 25 in stets gleichem zeitlichen Ablauf entsteht, also bei unverändertem Überwachungsraum reproduzierbar ist.

Der Empfänger 28 gibt das zeitabhängige Signal als äquivalente Wechselspannung an einen Empfangsverstärker 27, an dessen Ausgang 29 dann ein Wechselspannungssignal 30 anfällt, dessen Aussehen aus der mittleren Kurve 30 in Fig. 2 und 3 zu entnehmen ist. Das Empfangssignal 30 wird über eine bestimmte Meßzeitlänge ausgewertet, die ausweislich der Fig. 3 im Zeitpunkt t1' beginnt und im Zeitpunkt t2' endet, womit sich die mit 36 in Fig. 3 bezeichnete "Meßzeit 36" ergibt. Auch in Fig. 3 ist die horizontale Zeitachse durch vertikale Strichlinien eingeteilt, deren Abstand 31 10 msec. gegenüber dem Abstand 21 von Fig. 2 von 0,2 msec. beträgt. Der Abstand 21 der Zeitskala von Fig. 2 erscheint daher im Maßstab der Fig. 3 als eine Zeitlänge von nur 0,48 mm. Im Maßstab von Fig. 3 beschränkt sich die ganze Länge der in Fig. 2 gezeigten Kurve 30 auf die anfänglichen 4,4 mm des in Fig. 3 dargestellten Empfangssignals 30. Damit ein stets reproduzierbares Empfangssignal 30 gemäß Fig. 3 erreicht wird, liegt der Empfangssignal-Beginn tl' stets in definierter zeitlicher Lage zu dem oben erwähnten Sendeimpuls-Beginn tl. Damit nimmt auch das Empfangssignal-Ende t2' eine definierte Lage zu t1 bzw. t2 des Sendeimpulses 19 ein. Die Sendezeit 16 wie auch die Meßzeit 36 werden vom Prozessor 12 bestimmt. Im vorliegenden Fall ist daher der Einfachheit wegen t1 = t1' und auch die Sendezeit 16 ist gleich der Meßzeit 36 gewählt, weshalb auch t2 und t2' zeitlich zusammenfallen. Dies ist auch an der Lage der oberen und mittleren Kurve 15, 30 in Fig. 3 zu erkennen. Die Länge der Sende- und Meßzeit 16, 36 werden in Abhängigkeit von der Größe des zu überwachenden Raumes 20 ausgewählt. an will, wie bereits erwähnt wurde, den Einlaufzustand des Interferenzfeldes 25 bis zu seinem stationären Zustand erfassen.

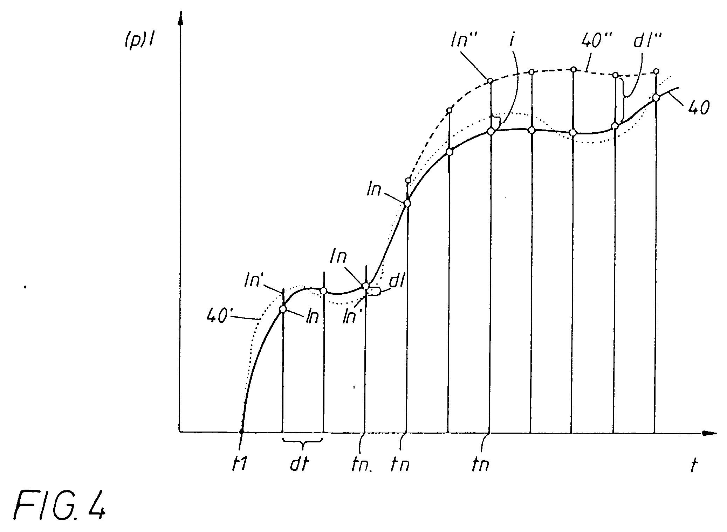

Wie aus Fig. 1 erkennbar, wird die Wechselspannung des Empfangssignals 30 durch einen Vollweg-Gleichrichter 32 und einen nachfolgenden Tiefpaßfilter 33 integriert und damit die in der untersten Kurve von Fig. 2 und 3 dargestellte Hüllkurve 40 gewonnen, die ein für die Beschaffenheit des Überwachungsraumes 20 spezifisches Profil erzeugt, das nachfolgend als "Zeit-Meßwert-Profil 40" benannt werden soll. Dieses ist in Fig. 4 schematisch mit seinem ersten Profilteilstück als ausgezogene Linie 40 dargestellt, die übereinstimmend mit dem Beginn der Meßzeit 36, und hier auch der Sendezeit 16, beginnt. Als Ordinate in Fig. 4 erscheinen die Meßwerte, die als Druckwerte p des am Ort 26 anfallenden Interferenzfeldes 25 aufzufassen sind. Das Profil 40 ist ein unipolares positives Signal. Das Tiefpaßfilter 33 filtert die eingangs erwähnte Trägerfrequenz von 25 kHz weg.

Über die Leitung 34 gelangt das Zeit-Meßwert-Profil 40 zu einem A/D-Wandler 35, wo es quantisiert wird und über die Leitung 37 zum Prozessor 12 gelangt, wo es weiter ausgewertet wird. In Fig. 4 sind die Quantisierungs-Zeitpunkte tn eingetragen, an denen über das Profil 40 durch den Wandler 35 ein bestimmter Meßwert In jeweils anfällt, der als binäre Zahl zum Prozessor 12 gelangt. Aus dem Profil 40 erhält somit der Prozessor 12 die Meßwerte In als binäre Zahlenreihe, die er in einem ersten Speicher 38 einer zum Prozessor 12 gehörenden Datenbank 39 festhält. Zwischen dem Ansteuerungs-Signal 15, nämlich dessen Signal-Beginn tl und den aus Fig. 4 ersichtlichen Quantisierungs-Zeitpunkten tn besteht absolute Synchronität. Die über das Empfangs-Signal 30 erlangte Antwort über die Beschaffenheit des Überwachungsraums 20 ist in der Datenbank 39 als eine Reihe von digitalen Referenzwerten verfügbar, die, wenn sich die Beschaffenheit des Überwachungsraums nicht ändert, jederzeit reproduzierbar ist. Die Quantisierungs-Zeitpunkte tn ergeben sich aus festen Zeitschritten dt.

Wird die Vorrichtung 10 nach der Erfindung eingeschaltet, so wird zunächst die Datenbank 39 mit den Referenzwerten In nach dem vorbeschriebenen Verfahren angelegt. Zweckmäßigerweise werden dabei die Referenzwerte durch mehrfach wiederholte Meßvorgänge der beschriebenen Art aus mehreren nacheinander erzeugten Profile 40 ermittelt. Diese Zahlenreihe aus Referenzwerten In stellt den derzeitigen Zustand des Überwachungsraums dar.

Nach dem Einschalten der Vorrichtung werden in an sich beliebigen zeitlichen Abständen, von z.B. 0,5 sec. Messungen ausgeführt, die über das beschriebene Profil 40' zu neuen Datenreihen In' führen und die vom Prozessor 12 mit den verfügbaren Referenzwerten In der Datenbank 39 verglichen werden. Dabei mag als neues Profil 40' die in Fig. 4 gepunktet angedeutete Linie sich ergeben, die zu den angedeuteten neuen Meßwerten In' führt, die bezüglich des Ansteuerungs-Signal-Beginns t1 natürlich an den exakt gleichen Quantisierungs-Zeitpunkten tn abgelesen werden. Aus den in Fig. 4 mit dI bezeichneten Abweichungen zwischen dem jeweiligen Meßwert In' und dem abgespeicherten Referenzwert In wird auf eine Veränderung des Überwachungsraums 20 geschlossen. Bei dem Vergleich wird aber bei jedem Referenzwert In eine ebenfalls in Fig. 4 als markante vertikale Strecke veranschaulichte Toleranzspanne i berücksichtigt, deren Größe für unterschiedliche Referenzwerte unterschiedlich groß sein kann. Die Größe der Toleranzspanne i kann ferner in Abhängigkeit von der Streuung der vorausgehenden Meßergebnisse bei den wiederholt durchgeführten Meßgängen zur Ermittlung der abgespeicherten Referenzwerte In abhängig gemacht werden, weil damit im Überwachungsraum sich ergebende natürliche Schwankungen, z.B. eine im Kraftfahrzeug pendelnde Schlaufe, berücksichtigt werden. Schließlich kann die Größe der Toleranzspanne i von den Abweichungen dI an den übrigen Quantisierungs-Zeitpunkten tn abhängig gemacht werden.

Im angenommenen Beispiel von Fig. 4 liegt die aus dem neu ermittelten Profil 40' sich ergebende Meßwert-Reihe In' innerhalb der angenommenen Toleranzspanne i der zum Referenzprofil 40 gehörenden Referenzwert In. Dies erkennt der Prozessor 12 als zulässige Schwankungen bzw. Änderungen im Überwachungsraum 20 an, die nicht auf ein meldepflichtiges Ereignis zurückzuführen sind und daher nicht zur Auslösung eines Alarms in dem daran angeschlossenen Alarmgeber 41 führen. In Fig. 4 ist aber auch, als Strichkurve, ein Profil 40" eines weiteren Meßvorgangs eingezeichnet, dessen an den jeweiligen Quantisierungs-Zeitpunkten tn anfallenden Meßwerte In" außerhalb der Toleranzspanne i liegen und demgegenüber größere, in Fig. 4 angedeutete Abweichungen dI" ergeben. Dies wird im übrigen auch, wie ersichtlich, an mehreren Meßwerten In" festgestellt, was der Prozessor 12 aufgrund seines Auswerteprogramms als ein im Überwachungsraum 20 sich ergebendes meldepflichtiges Ereignis erkennt und daher über die Leitung 42 den Alarmgeber 41 auslöst. Dazu können akustische und/oder optische Alarmsignale abgegeben werden. Bei einem Kraftfahrzeug wird zugleich die Zündspannung zum Motor unterbrochen.

Um zu vermeiden, daß Temperaturschwankungen, Luftdruckänderungen oder die Bauteildrift bereits einen Fehlalarm veranlassen, verfügt die Vorrichtung 10 über eine Lernfähigkeit, die anhand der Fig. 4 erläutert werden kann. Auszugehen ist zunächst davon, daß im Speicher 38 der Datenbank 39 die aus dem Profil 40 sich ergebenden Referenzwerte In gespeichert sind. Fällt bei einer späteren Messung eine noch tolerierbare Abweichung an, die z.B. zu dem neuen Profil 40' von Fig. 4 führt, so nimmt der Prozessor 12 die entsprechenden Werte In' als die schallgemäße Beschreibung der aktuellen Beschaffenheit des Überwachungsraums 20 an und hält diese als neue Referenzwerte In' in einem zweiten Speicher 38' seiner Datenbank 39 fest, der in Fig. 1 ebenfalls eingezeichnet ist. Der andere Speicher 38 wird gelöscht und steht für die Aufnahme künftiger, den späteren Zustand des Überwachungsraum kennzeichnender Meßdaten zur Verfügung. Bei der Ermittlung der neuen Referenzwerte für den zweiten Speicher 38' kann auch so verfahren werden, daß zu den bis dahin geltenden Referenzwerten In die neu ermittelten tolerierbaren Meßwerte In' rechnerisch hinzugezählt und daraus ein Zwischenwert ermittelt wird, der dann als künftiger neuer Referenzwert im Speicher 38' aufgenommen wird. Damit folgt die Vorrichtung langsamer, aber auch vorsichtiger etwaigen Änderungen in den Verhältnissen des Überwachungsraums 20.

Um eine optimale Ausnutzung des Spannungsbereichs vom Wandler 35 zu erhalten, sollte die Vorrichtung einjustiert werden, damit sie den Verhältnissen des Überwachungsraums 20 optimal angepaßt ist. Im Überwachungsraum 20 liegende größere Gegenstände können nämlich die Amplitude des Empfangssignals 30 stark beeinflussen. Deswegen wird beim Einschalten der Vorrichtung 10, noch bevor die ersten Referenzwerte In ermittelt werden, die optimale Trägerfrequenz im Sendeimpuls 19 ermittelt. Dazu werden, gesteuert von einem Programm des Prozessors 12, Testfrequenzen gesendet, die eine Raumantwort erzeugen, wobei jene Sendefrequenz ausgewählt wird, deren Amplitude im optimalen Bereich des A/D-Wandlers 35 liegt. Dadurch wird die Selektivität des Wandlers 35, aber auch des Ultraschallgebers 18 und des Empfängers 28 ausgenutzt, die sich aus deren Resonanz-Kennlinie ergibt. Diese Selbstjustierung bietet den Vorteil, daß die Vorrichtung optimal ohne weiteren hardwaremäßigen Aufwand seitens des Prozessors 12 realisiert werden kann.

Die bereits oben erwähnte Wirksamkeit der Vorrichtung 10 in zeitlichen Abständen von z.B. 0,5 sec. dient einer drastischen Minderung der Leistungsaufnahme der Überwachungsvorrichtung, was insbesondere für die Überwachung von abgestellten Kraftfahrzeugen bedeutsam ist. Über das Steuerprogramm im Prozessor 12 wird die Überwachungsvorrichtung 10 nach dem Einschalten zwischen den Meßvorgängen in einem sogenannten "Stand-by-Modus" gefahren, wo sie praktisch abgeschaltet, aber jederzeit zu einer Messung bereit ist. Das ruhende System wird über eine mit 43 in Fig. 1 angedeutete Weckschaltung geweckt. Eine in Fig. 1 angedeutete Spannungs-Versorgungs-Einheit 44 hält über die Leitung 45 lediglich den Prozessor 12 und daher den Ablauf des dortigen Steuerprogramms ständig in Betrieb, von wo aus über eine Steuerleitung 45' die über den Ausgang 46 beaufschlagte Versorgungsleitung 47 von der Spannung abgeschaltet ist. Wie aus Fig. 1 weiter ersichtlich, werden über diese Versorgungsleitung 47 alle weiteren Bauteile, wie die Verstärker 14, 27, der Gleichrichter 32 und das Tiefpaßfilter 33 beaufschlagt. Während der erwähnten Ruhezeiten ist die Versorgungsleitung 47 abgeschaltet und die damit verbundenen elektronischen Bauteile verbrauchen keine Energie. Nach Ablauf der Ruhezeit wirkt das Weckglied 43 über die Leitung 48 den Prozessor 12, der dann über die Steuerleitung 45' die Versorgungsleitung 47 der Überwachungsvorrichtung 10 einschaltet und damit den geschilderten Meßvorgang für die beschriebene Sendedauer 16 von ca. 0,07 sec. einschaltet.

Mit der erfindungsgemäßen Überwachungsvorrichtung 10 werden nicht die Bewegungen an sich, sondern Änderungen im Überwachungsraum detektiert. Dadurch können auch Bewegungen erkannt werden, welche in den vorgenannten Ruhezeiten der Vorrichtung 10 ablaufen. Verschiebt sich nämlich beispielsweise das Objekt 23 im Meßraum 20 um eine bestimmte Strecke, so gelangen die Reflexions-Signale 24 in anderer zeitlicher Folge an den Ort 26 des überwachenden Ultraschallempfängers 28 und bilden dort einen anderen zeitlichen Aufbau des erfaßten Interferenzfeldes 25, der dann stets als eine Reihe von Meßwertdaten In" ermittelt wird, die nach Fig. 4 zu einem meldepflichtigen Ereignis gehören, das den Alarmgeber 41 auslöst. Das System reagiert selbst auf langsamste Bewegungen, weil es auf den Ort des Objekts 23 empfindlich reagiert. Dennoch paßt sich die erfindungsgemäße Vorrichtung, wie beschrieben wurde, an veränderte Umweltbedingungen flexibel an. Eine große Störsicherheit ist gewährleistet. Durch die Prozessor-Steuerung wird auch eine hohe Flexibilität erreicht, denn das Steuerprogramm kann auch vorsehen, daß nicht sogleich, wenn an einer Stelle oder in einem Bereich des neu ermittelten Meßprofils 40" sich Abweichungen gegenüber dem Referenzprofil 40 von Fig. 4 ergeben, Alarm ausgelöst wird. Vielmehr ist es in diesem Fall möglich, daß die Vorrichtung 10, möglichst in wesentlich kürzeren Zeitabständen, durch ein erneutes "Nachschauen" sich weitere Meßdaten in Form von weiteren Meßprofilen 40" verschafft, die dann gemeinsam ausgewertet werden. Ergibt die Summe dieser Kontrollmessungen, daß auch dann noch nicht tolerierbare Änderungen dI" gemäß Fig. 4 vorliegen, dann wird vom Prozessor 12 aus der Alarm ausgelöst. Im anderen Fall, wenn die weiteren Meßprofile eine Korrektur des an sich meldepflichtigen anfänglichen Meßprofils 40" erbracht haben, die innerhalb des Toleranzbereiches liegt, dann unterbleibt der Alarm. Dadurch wird Fehlalarm vermieden.

### Bezugszeichenliste:

- 10: Überwachungsvorrichtung
- 11, 11': Gehäuse
- 12: Prozessor
- 13: elektrische Leitung
- 14: Sendeverstärker
- 15: Ansteuerungs-Signal
- 16: Sendezeit
- 17: Verstärkerausgang
- 18: Ultraschallgeber
- 19: Sende-Impuls
- 20: Überwachungsraum
- 21: Zeitskalen-Einteilung von Fig. 2 (0,2 msec.)
- 22: Aussetzer in 15
- 23: Objekt in 20
- 24: Reflexions-Signal von 23
- 25: Interferenzfeld in 20
- 26: Überwachungsort von 28
- 27: Empfangsverstärker
- 28: Ultraschallempfänger
- 29: Verstärkerausgang
- 30: Empfangs-Signal, Wechselspannung
- 31: Zeitskalen-Teilung von Fig. 3 (10 msec.)
- 32: Gleichrichter
- 33: Tiefpaßfilter
- 34: Leitung
- 35: A/D-Wandler
- 36: Meßzeit von 30
- 37: Leitung
- 38: erster Speicher
- 38': zweiter Speicher
- 39: Datenbank
- 40: Hüllkurve, Zeit-Meßwert-Profil, Referenzprofil
- 40': tolerierbares Meßprofil
- 40": nicht tolerierbares Meßprofil
- 41: Alarmgeber
- 42: Leitung
- 43: Weckschaltung
- 44: Spannungs-Versorgungs-Einheit
- 45: Leitung
- 45': Steuerleitung
- 46: Ausgang von 44
- 47: Versorgungsleitung
- 48: Leitung

- dI: Abweichungen zwischen In und In'
- dI": Abweichungen zwischen In und In"

- In: Referenzwert
- In': tolerierbarer neuer Meßwert
- In": nicht tolerierbarer Meßwert

- i: Toleranzspanne zwischen In, In'

- t1: Sende-Impuls-Beginn
- t1': Empfangs-Signal-Beginn

- t2: Sendeimpuls-Ende
- t2': Empfangssignal-Ende

- tn: Quantisierungs-Zeitpunkt

- dt: Zeitschritt zwischen tn, tn

## Patentansprüche

1. Vorrichtung zur Ultraschall-Überwachung von Räumen (20), insbesondere bei Kraftfahrzeugen,
bei der ein Ultraschallgeber (18) während sich wiederholender Sendezeiten den Überwachungsraum (20) und die dort befindlichen Objekte (23) mit einem stets reproduzierbaren Ultraschallimpuls (Sendeimpuls 19) definierter Sendedauer (16) bestrahlt,
ein Ultraschallempfänger (28) über mit den Sendezeiten (16) abgestimmten Meßzeiten (36) das Ultraschallfeld mißt,
ein Auswerter (12) das während der Meßzeiten (36) jeweils anfallende Zeit-Meßwert-Profil (40) erfaßt, abspeichert, mit dem bei einem vorausgehenden Sendeimpuls angefallenen Profil vergleicht,
und den Alarmgeber (41) dann aktiviert , wenn die beim Vergleich ermittelte Abweichung (dI;dI") eine bestimmte Toleranzspanne (i) übersteigt, dadurch gekennzeichnet, daß am Ort des Ultraschallempfängers (28) der zeitliche Aufbau des durch die Überlagerung der vom Ultraschallgeber (18) abgestrahlten und der im Überwachungsraum (20) reflektierten Schallwellen entstehenden Interferenzfeldes ermittelt und als Zeit-Meßwert-Profil gespeichert wird, wobei der Ultraschallempfänger in den Meßzeiten den im Überwachungsraum erzeugten Aufbau des Interferenzfeldes mißt, und hierzu Sendezeiten (16) und Meßzeiten (36) zumindest näherungsweise zusammenfallen.

2. Vorrichtung nach Anspruch 1, dadurch gekennzeichnet, daß der Auswerter (12) das Zeit-Meßwert-Profil (40) an feststehenden, mit dem Ansteuerungssignal (15, t1) für den Ultraschallgeber (18) exakt abgestimmten Zeitpunkten (tn), insbesondere in definierten Zeitschritten (dt), quantisiert (In)
und die so erlangte Zahlenreihe (In) der zugehörigen Meßwerte über die derzeitige Beschaffenheit des Überwachungsraumes (20) in einer Datenbank (39), vorzugsweise digital, abspeichert (38),
wobei diese Zahlenreihe die Referenzdaten (In) für die spätere Vergleichsarbeit des Auswerters (12) bildet.

3. Vorrichtung nach einem der Ansprüche 1 oder 2, dadurch gekennzeichnet, daß die Referenzdaten (In) in der Datenbank (39) aus einer Vielzahl von in aufeinanderfolgenden Meßvorgängen (40,40') erlangten Meßwerte ermittelt werden.

4. Vorrichtung nach einem der Ansprüche 1 bis 3, dadurch gekennzeichnet, daß der Auswerter (12) die geltenden Referenzdaten (40,40') jeweils wechselweise in einen von zwei Speichern (38,38') aufnimmt,
wobei der Auswerter (12) die bei der Quantisierung des aktuellen Zeit-Meßwert-Profils anfallenden Meßwerte (In') nur dann als neuen Referenzwert akzeptiert bzw. zur Referenzwert-Ermittlung heranzieht,
wenn diese im Vergleich mit dem bisher geltenden Referenzwert (In) eine bestimmte Toleranzspanne (i) nicht/übersteigt, andernfalls aber den Alarmgeber (41) wirksam setzt.

5. Vorrichtung nach einem der Ansprüche 1 bis 4, dadurch gekennzeichnet, daß der Auswerter (12) bei einer ermittelten Störung vor dem Wirksamsetzen des Alarmgebers (41) zunächst eine oder mehrere Nachmessungen ausführt, vorzugsweise in einer gegenüber dem Normalbetrieb kürzeren zeitlichen Folge, sowie auswertet
und erst nach Auswertung dieser Meßergebnisse entscheidet, ob der Alarmgeber (41) wirksam zu setzen ist.

6. Vorrichtung nach einem der Ansprüche 1 bis 5, dadurch gekennzeichnet, daß der Ultraschallgeber (18) durch ein Ansteuerungssignal (15) angesteuert wird, das markante Aussetzer (22) aufweist, die eine Schwebung im Ultraschallimpuls (19) erzeugen.

7. Vorrichtung nach einem der Ansprüche 1 bis 6, dadurch gekennzeichnet, daß der Auswerter (12) vor Ermittlung der Referenzdaten (In) diejenige Sendefrequenz für den Ultraschallgeber (18) selbsttätig auswählt,
die, in Abhängigkeit von der jeweiligen Beschaffenheit des Überwachungsraums, an den Meßbereich des Auswerters (12,35) optimal angepaßt ist.

8. Vorrichtung nach einem der Ansprüche 1 bis 7, dadurch gekennzeichnet, daß zwischen den einzelnen Meßgängen zur Ermittlung der jeweiligen Zeit-Meßwert-Profile (40) die Stromversorgung (47) von Bauteilen (14,27,32,33) normalerweise abgeschaltet ist (stand-by-modus)
und eine Weckschaltung (43) die Stromversorgung (47) in zyklischer Folge einschaltet (48,45').

9. Vorrichtung nach einem der Ansprüche 1 bis 8, dadurch gekennzeichnet, daß der Auswerter ein Prozessor (Mikro-Computer 12) ist.

## Claims

1. A device for ultrasound surveillance of spaces (20), more particularly in motor vehicles, in which a ultrasonic transmitter (18) irradiates the surveillance space (20) and the objects (23) located therein with a constantly reproducible ultrasonic pulse (transmission pulse 19) having a defined transmission duration (16) during repeating transmission periods, an ultrasonic receiver (28) measures the ultrasonic field during measurement periods (36) corresponding to the transmission periods (16), an evaluation unit (12) determines the time-measurement value profile (40) produced during the measurement periods (36), stores this value and compares it with the profile produced during a preceding transmission pulse, and then activates the alarm transmitter (41) if the deviation (dI; dI") determined during the comparison exceeds a given tolerance range, characterised in that the build-up over time of the interference field produced as a result of the overlap of the sound waves transmitted by the ultrasonic transmitter (18) and reflected by the surveillance space (20) is determined at the site of the ultrasonic receiver (23) and stored as the time-measurement value profile, the ultrasonic receiver measuring the build-up of the interference field generated in the surveillance space during the measurement periods, and to this end the transmission periods (16) and the measuring periods (36) coinciding at least approximately.

2. A device according to claim 1, characterised in that the evaluation unit (12) quantises (In) the time-measurement value profile (40) at fixed points in time (tn), which are precisely determined by the actuating signal (15, t1) for the ultrasonic transmitter (18), more particularly at defined intervals (dt), and the number sequence (In) obtained in this manner from the associated measurement values relating to the instantaneous condition of the surveillance space (20) is stored (38), preferably digitally, in a data bank (39), this number sequence forming the reference data (In) for the subsequent comparison task of the evaluation unit (12).

3. A device according to one of claims 1 or 2, characterised in that the reference data (In) in the data bank (39) is determined from a plurality of measurement values determined in successive measurement procedures (40, 40').

4. a device according to one of claims 1 to 3, characterised in that the evaluation unit (12) receives the relevant reference data (40, 40') alternately in one of two stores (38, 38'), the evaluation unit (12) only accepting the measurement values (In') produced during the quantisation of the current time-measurement value profile as a new reference value or only using these measurement values to determine a reference value if the said measurement value does not exceed a given tolerance range (i) as compared with the previously valid reference value (In), but otherwise triggering the alarm transmitter (41).

5. A device according to one of claim 1 to 4, characterised in that, when a disturbance is detected, the evaluation unit (12) firstly carries out one or more secondary measurements before triggering the alarm transmitter (41), preferably in a sequence which is shorter than during normal operation, carries out- an evaluation and only after evaluating this measurement result decides whether or not the alarm transmitter (41) is to be triggered.

6. A device according to one of claims 1 to 5, characterised in that the ultrasonic transmitter (18) is actuated by an actuation signal (15), which comprises clearly defined skips (22), which produce a surge in the ultrasonic pulse (19).

7. A device according to one of claims 1 to 6, characterised in that, prior to determining the reference data (In), the evaluation unit (12) automatically selects the transmission frequency for the ultrasonic transmitter (18) which is optimally suited to the measurement range of the evaluation unit (12, 35), taking into account the respective condition of the surveillance space.

8. A device according to one of claims 1 to 7, characterised in that the current supply (47) is usually switched off (stand-by-mode) by components (14, 27, 32, 33) between the individual measuring sequences for determining the respective time-measurement value profile (40) and a wake-up circuit (43) connects the current supply (47) in a cyclical sequence.

9. A device according to one of claims 1 to 8, characterised in that the evaluation unit is a processor (micro computer 12).

## Revendications

1. Dispositif de surveillance ultrasonore d'espaces (20), en particulier dans des véhicules automobiles,
dans lequel, durant des temps répétitifs d'émission, un générateur d'ultrasons (18) balaie l'espace surveillé (20), et les objets (23) qui s'y trouvent, par une impulsion ultrasonique (impulsion d'émission 19) reproductible en permanence et présentant une durée d'émission (16) bien définie,
un récepteur d'ultrasons (28) mesure le champ ultrasonique par l'intermédiaire de temps de mesurage (36) coordonnés avec les temps d'émission (16),
un interprétateur (12) détecte le profil (40) temps-valeur mesurée se présentant respectivement pendant les temps de mesurage (36), le mémorise et le compare au profil obtenu lors d'une impulsion d'émission précédente,
puis active le déclencheur d'alarme (41) lorsque l'écart (dI ; dI"), établi lors de la comparaison, excède une marge de tolérance déterminée (i),
caractérisé par le fait que, à l'emplacement du récepteur d'ultrasons (28), la structure temporelle du champ d'interférence, résultant de la superposition des ondes sonores diffusées par le générateur d'ultrasons (18) et réfléchies dans l'espace surveillé (20), est établie et est mémorisée en tant que profil temps-valeur mesurée, le récepteur d'ultrasons mesurant, durant les temps de mesurage, la structure du champ d'interférence engendrée dans l'espace surveillé, et les temps d'émission (16) et les temps de mesurage (36) coïncident, à cette fin, au moins approximativement.

2. Dispositif selon la revendication 1, caractérisé par le fait que l'interprétateur (12) quantifie (In) le profil (40) temps-valeur mesurée, notamment en des étapes bien définies (dt), à des instants fixes (tn) exactement coordonnés avec le signal (15, t1) d'activation du générateur d'ultrasons (18), et mémorise (38) dans une banque de données (39), de préférence en mode numérique, la série de nombres (In) ainsi obtenue pour les valeurs mesurées associées, relatives à l'état instantané de l'espace surveillé (20),
cette série de nombres formant les données de référence (In) pour l'opération de comparaison ultérieure de l'interprétateur (12).

3. Dispositif selon l'une des revendications 1 ou 2, caractérisé par le fait que les données de référence (In) sont établies, dans la banque de données (39), sur la base d'un grand nombre de valeurs mesurées obtenues au cours de processus de mesurage successifs (40, 40').

4. Dispositif selon l'une des revendications 1 à 3, caractérisé par le fait que l'interprétateur (12) reçoit les données de référence valables (40, 40'), d'une manière respectivement alternée, dans l'une de deux mémoires (38, 38'), auquel cas l'interprétateur (12) accepte en tant que nouvelle valeur de référence ou utilise, pour établir la valeur de référence, les valeurs mesurées (In') présentes lors de la quantification du profil effectif temps-valeur mesurée,
uniquement lorsque cette dernière n'excède pas une marge de tolérance déterminée (i) comparativement à la valeur de référence (In) jusqu'à présent valable, faute de quoi il met en action le déclencheur d'alarme (41).

5. Dispositif selon l'une des revendications 1 à 4, caractérisé par le fait qu'en cas de perturbation constatée, préalablement à la mise en action du déclencheur d'alarme (41), l'interprétateur (12) exécute tout d'abord un ou plusieurs post-mesurage(s), de préférence en une succession temporelle plus courte par rapport au fonctionnement normal, ainsi qu'une interprétation,
et décide, uniquement après interprétation de ces résultats de mesure, si le déclencheur d'alarme (41) doit être mis en action.

6. Dispositif selon l'une des revendications 1 à 5, caractérisé par le fait que le générateur d'ultrasons (18) est activé par un signal d'activation (15) qui présente des irrégularités constatables (22) engendrant un battement dans l'impulsion ultrasonique (19).

7. Dispositif selon l'une des revendications 1 à 6, caractérisé par le fait que, préalablement à l'établissement des données de référence (In), l'interprétateur (12) sélectionne automatiquement, pour le générateur d'ultrasons (18), la fréquence d'émission
qui, en fonction de l'état considéré de l'espace surveillé, est optimalement adaptée à la plage de mesurage de l'interprétateur (12, 35).

8. Dispositif selon l'une des revendications 1 à 7, caractérisé par le fait que, entre les processus de mesurage individuels en vue d'établir les profils respectifs (40) temps-valeur mesurée, l'alimentation en courant (47) de composants (14, 27, 32, 33) est normalement mise hors fonction (stand-by-modus)
et un circuit de réveil (43) enclenche (48, 45') l'alimentation en courant (47) selon une succession cyclique.

9. Dispositif selon l'une des revendications 1 à 8, caractérisé par le fait que l'interprétateur est un processeur (micro-ordinateur 12).
